# EUROPEAN PATENT APPLICATION

(11) **EP 1 559 934 A1**
(43) Date of publication of application: **03.08.2005**
(21) Application number: 04001918.4
(22) Date of filing: 29.01.2004
(51) Int. Cl.: F16J 9/24

(54) **Piston rings particularly for two-stroke engines**

(71) Applicant: Braghieri, Enrico, 56012 Fornacette (Prov. of Pisa) (IT)
(72) Inventor: Braghieri, Enrico, 56012 Fornacette (Prov. of Pisa) (IT)
(74) Representative: Modiano, Guido, Dr.-Ing.

(57) **Abstract**

A piston ring particularly for two-stroke internal-combustion engines for any application, having an improved torsional rigidity that provides improved compression seal capabilities, reduced blow-by of burnt gases, and reduced wear of the surface for contact with the walls of the cylinder, the piston ring being provided with a bayonet cut and with a dowel seat that is displaced with respect to the region of the cut.

## Description

The present invention relates to a piston ring particularly for two-stroke internal-combustion engines for any application, from transportation to hobbies, to gardening tools et cetera.

Piston rings are metallic elements (made for example of cast iron, steel, sintered material and other known materials) that are generally shaped like an open ring, i.e., have a cut that allows their elastic deformation in order to facilitate their insertion in the corresponding seats formed in the piston and apply the contact pressures against the walls of the cylinder.

It is known that the piston ring, when not restrained, has an outside diameter that is greater than the inside diameter of the cylinder in which it must slide rigidly with the piston; in working conditions, such piston ring is forced by such inside diameter to deform its annular shape elastically, and due to its elasticity and to the cut that opens it, the ring applies a radial pressure to the walls of the cylinder with a preset pressure distribution.

The function of piston rings in internal-combustion engines is well-known.

They perform at least one of the following three tasks, but if necessary a single piston ring can be designed to perform all three tasks simultaneously:
first of all, the ring must provide a seal with respect to the pressurized gases generated inside the cylinder and in particular in the combustion chamber, preventing their escape toward the bottom of the cylinder (for example the crankcase);
secondly, it must prevent the oil vapors that fill the bottom of the cylinder (for example the crankcase) and the oil itself from passing above the ring, reaching the combustion chamber;
thirdly, it must transmit to the walls of the cylinder most of the heat that the head of the piston receives from the combustion, thus contributing to the cooling of said piston.

Since in the case of two-stroke engines the transfer ports are located at the internal wall of the cylinder, the piston ring used in these engines must be able to apply reduced contact pressures in the regions where it passes over such ports, so as to prevent, during the stroke of the piston, the ends of the ring from remaining "stuck" on the ports of the cylinder, breaking said ring.

For this reason, the region of the ring that is located at the cut must slide at a region of the wall of the cylinder that is flat, i.e., has no venting ports.

In order to ensure that this occurs, therefore, piston rings used in two-stroke engines absolutely must not rotate and move from their original position in which they are arranged, and in which the cut is located at a solid region of the wall of the cylinder.

In order to prevent rotation of the piston ring, on the piston, in the middle of the groove for accommodating said ring, there is an appropriately provided retention element, termed dowel (of the internal or normal type), which has an appropriately provided seat on the ring which in the background art is generally provided at the cut of said ring.

The retaining dowel is designed to interfere with the corresponding seat formed in the piston ring in order to keep said ring in the correct position inside the appropriately provided groove formed in the piston, preventing its rotation.

These known solutions for piston rings used in two-stroke engines are not free from drawbacks, first all as regards the cut that interrupts the ring.

The presence of the cut, which is required in order to give the ring the elasticity required so that it applies to the walls of the cylinder the specific pressure that is needed to ensure tightness, obviously constitutes an opening of the ring that persists, albeit to a minimal extent, even when said ring is assembled on the piston and is forced to close inside the cylinder.

In particular, known types of piston ring used for two-stroke engines have notches with straight parallel or inclined oblique lips, and because of this shape of the two ends of the ring at the cut, and also due to the presence of the dowel or of a seat thereof, the discontinuity of the ring is not neutralized by a hoped-for perfect closure (a join that ideally should occur without discontinuities between the two ends), and this has disadvantageous effects on the compression seal of the gases with respect to the explosion chamber, since such rings produce a loss of pressure and accordingly a decrease in available power.

Another drawback that can be observed in known types of piston ring currently in use in two-stroke engines is the fact that they are unable to completely eliminate the blow-by of a percentage of burnt gases that arrive from the explosion chamber. These burnt gases convey carbon residues of combustion that can accumulate, interfering with the sliding of the piston in the cylinder until it seizes.

Another drawback that can be observed in known types of piston ring currently in use in two-stroke engines consists of reduced torsional rigidity of said ring due to the presence of a cut that is characterized by free ends with wings that are flat or oblique wings and in any case are always shaped so as to provide the dowel seat at the cut.

Simultaneously with the reduction in torsional rigidity, a reduction therefore also occurs in the ability of the ring to remain co-planar with respect to the surfaces of the groove of the piston, especially in the presence of intense stresses.

The aim of the present invention is to provide a piston ring particularly for two-stroke engines that is capable of eliminating or reducing the drawbacks cited above.

Within this aim, an object of the present invention is to provide a piston ring that is capable of ensuring a better compression seal, entailing a reduction in blow-bys of burnt gases or oil, with a consequent reduction in engine power loss, thus achieving an increase in efficiency and a reduction in accumulations of carbon residues.

Another object of the present invention is to provide a piston ring that has increased torsional rigidity with respect to known piston rings and is therefore capable of maintaining more effectively a co-planar arrangement with respect to the surfaces of the groove, accordingly allowing at the same time a better closure of the ports.

Another object of the present invention is to provide a piston ring that can be given, during manufacture, the ability to apply lower specific pressures, for an equal application, with respect to conventional rings, thus achieving reduced wear of the contact surfaces and therefore a longer life of said ring, which is nonetheless at the same time usable for any application, since it is perfectly interchangeable with conventional rings as it requires no modification to the corresponding groove of the piston in order to be accommodated.

Another object of the present invention is to provide a piston ring that can be used both by resorting to a retention dowel arranged inside the piston and by resorting to a normal retention dowel.

This aim and these and other objects that will become better apparent hereinafter are achieved by a piston ring particularly for two-stroke engines, comprising a cut that forms two free ends and at least one seat for a retention dowel of a piston, characterized in that said cut is a bayonet cut and in that said seat of the retention dowel is displaced with respect to the region where the cut is provided.

Further characteristics and advantages of the invention will become better apparent from the description of the following preferred but not exclusive embodiments of the piston ring according to the invention, illustrated by way of non-limiting example in the accompanying drawings, wherein:
Figure 1 is a perspective view of the piston ring according to the invention in the embodiment provided with a normal dowel seat;
Figure 2 is a top view of the ring of Figure 1;
Figure 3 is a front view of the detail of the normal dowel seat;
Figure 4 is a front view of the detail of the bayonet cut;
Figure 5 is a perspective view of the piston ring according to the invention in the embodiment provided with an internal dowel seat;
Figure 6 is a top view of the ring of Figure 5;
Figure 7 is a front view of the detail of the internal dowel seat;
Figure 8 is a front view of the detail of the bayonet cut;
Figure 9 is a perspective view of the piston ring according to the invention in a second embodiment, characterized by a transverse cross-section that has an L-shaped profile and an internal dowel seat;
Figure 10 is a perspective view of the piston ring according to the invention in a third embodiment, characterized by a transverse cross-section that has a trapezoidal profile and an internal dowel seat;
Figure 11 is a perspective view of the piston ring according to the invention, again in a third embodiment, characterized by a transverse cross-section that has a trapezoidal profile and a normal dowel seat.

With reference to the figures, the piston ring 1 according to the present invention is constituted by an open ring that is provided with a cut 1A that forms two free ends 2 and 3.

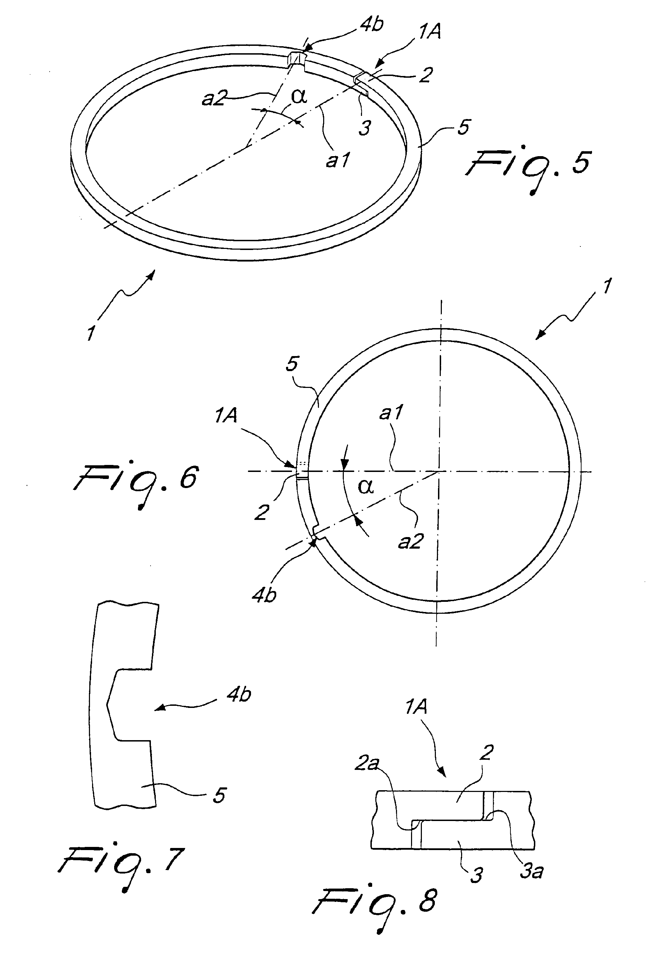

With particular reference to Figure 4, the particular shape of the cut is the so-called bayonet shape, which comprises two free ends 2 and 3 that are step-shaped with complementary profiles, so that a surface 2a of the end 2 overlaps a complementary surface 3a of the end 3.

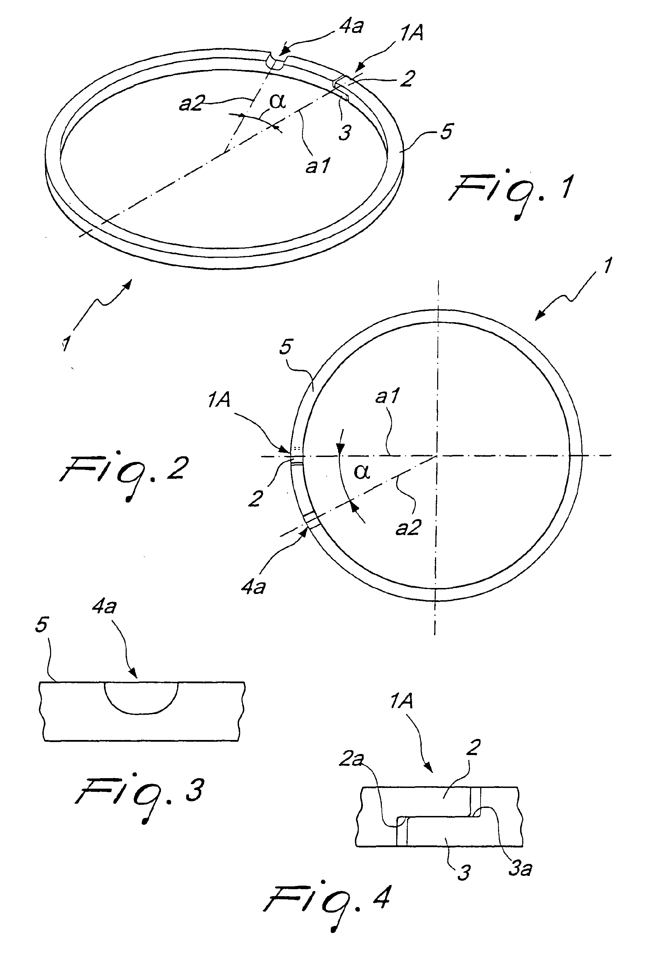

In this manner, as shown in Figures 1, 2 and 4, when the piston ring 1 is assembled on the piston inside the cylinder, its lateral surface 5 appears to be continuous, almost as if there were no discontinuity or gap even at the cut region 1A where the two ends 2 and 3 join.

As shown in the top view of Figure 2, a seat 4a for the piston retention dowel is provided along the piston ring 1, in a position that is displaced with respect to the region of the cut 1A formed by the ends 2 and 3.

In particular, Figure 2 illustrates an embodiment in which said seat 4a is shaped so as to accommodate a normal retention dowel.

Figures 5 to 7 instead illustrate an embodiment in which the seat 4b is shaped so as to accommodate an internal retention dowel.

In particular, it is convenient to determine the position of said seat 4a, 4b according to an angle α that is comprised between a radial axis of symmetry a1 of the cut region 1A and a radial axis of symmetry a2 of said seat for the retention dowel 4a, 4b, as shown in Figures 2 and 6.

The displaced position of the seat 4a, 4b of the dowel with respect to the cut region 1A allows to avoid compromising the strength of the two ends 2 and 3 of the ring and produces a coupling by overlap of said two ends that has good rigidity.

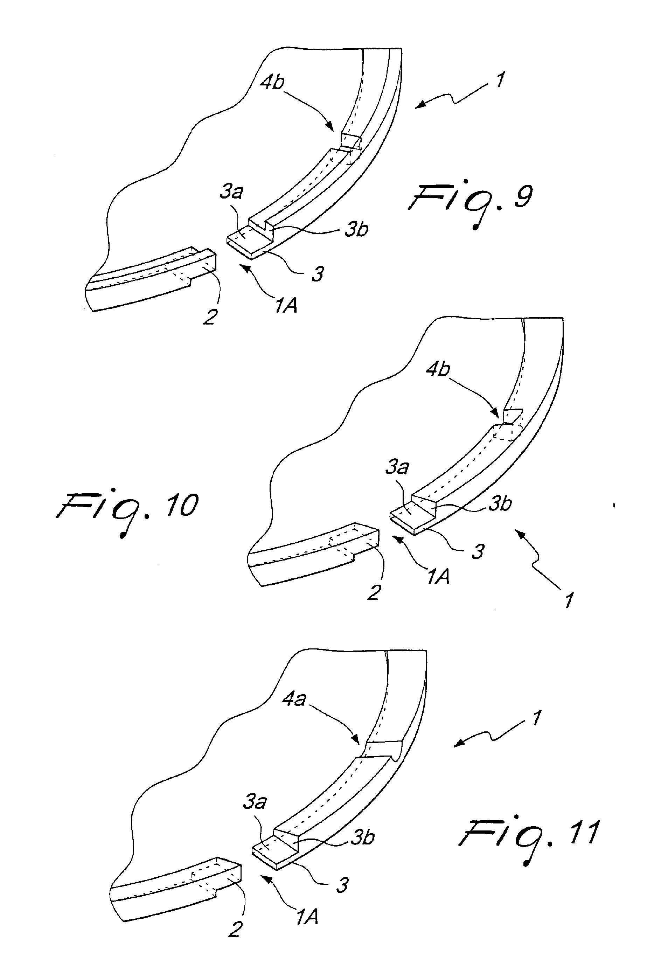

Finally, Figures 9 to 11 illustrate alternative embodiments of the same piston ring described above, characterized by transverse cross-sections that are different from the square or rectangular one shown in the rings of Figures 1 to 8.

In particular, Figure 9 illustrates a piston ring 1 that has a transverse cross-section provided with an L-shaped profile. The bayonet-like shape of the cut 1 A that forms the two free ends 2 and 3 forms, at the cut region 1 A, an L-shaped portion, for example 3b in the figure.

Figures 10 and 11 illustrate a third embodiment of the piston ring 1, in which the transverse cross-section has a trapezoidal profile. Here, too, the bayonet-like shape of the cut 1A that forms the two free ends 2 and 3 provides, at the cut region 1A, a trapezoidal portion, for example 3b in the figures. Figures 10 and 11 illustrate a piston ring 1 that has a trapezoidal transverse cross-section, respectively with a seat 4b for accommodating an internal retention dowel and with a seat 4a for accommodating a normal retention dowel.

The embodiments provided with a transverse cross-section having an L-shaped profile of Figure 9 and with a transverse cross-section having a trapezoidal profile of Figures 10 and 11 are used in particular in high-performance two-stroke engines, and are shown here together with the first embodiment having a square or rectangular cross-section by way of non-limiting example of the particular geometries that can characterize the shape of the transverse cross-section of the ring according to the present invention.

It has been found that the piston ring thus described allows to eliminate the drawbacks of known types of piston rings currently in use. In particular, the piston ring described above allows to improve the compression seal and to eliminate the drawback of blow-by caused by incomplete closure of the ends of the cut.

Moreover, it has been found that the piston ring thus described has a greater torsional rigidity than known types of ring, and this allows to improve the capacity to maintain the co-planar arrangement of said ring with respect to the surfaces of the groove of the piston.

Moreover, the object of providing a piston ring that requires lower cylinder contact pressures than known types of piston ring has been achieved, and therefore a reduced degree of wear and consequently a longer life of said ring have been achieved.

From what has been described above, the profile, shape or transverse cross-section of the ring, and particularly the shape of the sliding surface, may be any because they are not correlated to the invention.

Moreover, the piston ring according to the present invention can be made of any suitable material, such as for example cast iron, steel, sintered material, composite materials and materials having similar mechanical characteristics. Said ring can also have a surface coating suitable to improve its mechanical characteristics in the regions of contact and sliding with respect to the cylinder wall.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A piston ring particularly for two-stroke engines, comprising a cut (1A) that forms two free ends (2, 3) and at least one seat (4a, 4b) for a retention dowel of a piston, **characterized in that** said cut (1A) is a bayonet cut and **in that** said seat (4a, 4b) for the retention dowel is provided in the body of said ring in a region that is different from the region where the cut (1A) formed by the free ends (2, 3) is provided.

2. The piston ring according to claim 1, **characterized in that** the position of said seat (4a, 4b) with respect to said cut (1A) is defined by a nonzero angle (α) comprised between a radial axis of symmetry of said cut (a1) and a radial axis of symmetry of said seat (a2).

3. The piston ring according to any one of the preceding claims, **characterized in that** said seat for the retention dowel is a seat (4a) for a normal retention dowel.

4. The piston ring according to any one of claims 1 and 2, **characterized in that** said seat for the retention dowel is a seat (4a) for an internal retention dowel.

5. The piston ring according to any one of the preceding claims, **characterized in that** it is made of materials such as cast iron, steel, sintered material and composites.

6. The piston ring according to any one of the preceding claims, **characterized in that** it comprises a coating.

7. The piston ring according to any one of the preceding claims, wherein the transverse sectional profile of the ring and in particular the shape of the surface with which the ring slides on the cylinder may be any.

8. The piston ring according to claim 7, wherein said shape of the transverse sectional profile of the ring comprises the square, rectangular, L-shaped and trapezoidal shapes.

## Amended claims

### Amended claims in accordance with Rule 86(2) EPC.

**1.** A piston ring particularly for two stroke engines, comprising a cut (1A) that forms two free ends (2, 3) and at least one seat (4a, 4b) for a retention dowel of a piston, **characterized in that** said cut (1A) is a bayonet cut and **in that** the position of said seat (4a, 4b) for the retention dowel with respect to said cut (1A) is defined by a nonzero angle (α) comprised between a radial axis of symmetry of said cut (a1) and a radial axis of symmetry of said seat (a2).

**2.** The piston ring according to any one of the preceding claims, **characterized in that** said seat for the retention dowel is a seat (4a) for a normal retention dowel.

**3.** The piston ring according to any one of claims 1 and 2, **characterized in that** said seat for the retention dowel is a seat (4a) for an internal retention dowel.

**4.** The piston ring according to any one of the preceding claims, **characterized in that** it is made of materials such as cast iron, steel, sintered material and composites.

**5.** The piston ring according to any one of the preceding claims, **characterized in that** it comprises a coating.

**6.** The piston ring according to any one of the preceding claims, wherein the transverse sectional profile of the ring and in particular the shape of the surface with which the ring slides on the cylinder may be any.

**7.** The piston ring according to claim 7, wherein said shape of the transverse sectional profile of the ring comprises the square, rectangular, L-shaped and trapezoidal shapes.
